# EUROPÄISCHE PATENTSCHRIFT

(11) **EP 3 825 098 B1**
(45) Veröffentlichungstag und Bekanntmachung des Hinweises auf die Patenterteilung: **30.08.2023**
(21) Anmeldenummer: 20208910.8
(22) Anmeldetag: 20.11.2020
(51) Int. Cl.: B29C 63/16, B29C 51/26

(54) **OPTIMIERTE VORRICHTUNG FÜR KASCHIERUNG UND OPTIMIERTES KASCHIERUNGSVERFAHREN**
OPTIMIZED LAMINATION DEVICE AND OPTIMIZED LAMINATING METHOD
DISPOSITIF OPTIMISÉ DE LAMINATION ET PROCÉDÉ OPTIMISÉ DE LAMINATION

(30) Priorität: 21.11.2019 DE 102019131523
(43) Veröffentlichungstag der Anmeldung: 26.05.2021
(73) Patentinhaber: W-TIP GMBH & CO. KG, 74388 Talheim (DE)
(72) Erfinder: WÜSTHOLZ, Frank, 74388 Talheim (DE); WÜSTHOLZ, Florian, 74081 Horkheim (DE)
(74) Vertreter: Staeger & Sperling Partnerschaftsgesellschaft mbB

(56) Entgegenhaltungen:
- EP-A2- 0 145 832
- US-A1- 2009 151 576

## Beschreibung

Die Erfindung betrifft eine Vorrichtung zur Kaschierung von kaschierbaren Materialien sowie ein Verfahren zur Kaschierung, insbesondere mit einer entsprechenden Vorrichtung.

Verbesserte Kaschierverfahren finden insbesondere im Fahrzeugbau Anwendung. Dabei steht die Produktivität, Kosten und Fertigungstechnologie im Vordergrund. Ein Kaschierverfahren ist z. B. das Lederkaschieren. Hochwertige Fahrzeuginnenräume überzeugen durch Design und erstklassig verarbeitete Materialien. Dabei sind Textil- und Lederausstattungen nicht länger ausschließlich dem Premiumsegment vorbehalten, sondern kommen zunehmend auch in höherer Stückzahl in Fahrzeugen des mittleren Preissegments zum Einsatz. Daher ist es wünschenswert automatisierte Prozesse zu finden, mit denen sich solche Materialien, Textilien, Leder, Stoffe und dergleichen (im Folgenden allgemein als Oberware bezeichnet) auf einen Grundkörper oder Träger applizieren lassen.

Leder als natürlicher Werkstoff und andere Textilien stellen sehr hohe Anforderungen an die Verarbeitung. Um empfindliche Materialien wie Echtleder hochproduktiv und in reproduzierbarer Qualität zu verarbeiten, müssen die Einzelprozesse der Oberflächenbehandlung, des Klebstoffauftrags und das eigentliche Kaschieren exakt aufeinander abgestimmt werden. Häufig geschieht dies in manueller aufwändiger Tätigkeit.

Variantenvielfalt, Qualitätsanforderungen, Stückzahlen und eine Vielzahl projektspezifischer Einflussparameter erfordern clevere Fertigungslösungen, die nur mit umfangreicher Erfahrung und fundiertem Technologie- und Prozess-Know-how zu realisieren sind. Dies bringt hohen Aufwand und hohe Kosten mit sich.

So sind im Stand der Technik beispielhaft sogenannte Presskaschier-Werkzeuge vorgesehen. Diese sind zwar technisch ausgereift und praxiserprobt, erfordern aber hohe Werkzeugkosten. Damit solche Werkzeuge möglichst sicher in der Handhabung und flexibel tauschbar sind, sind zum Beispiel der Einsatz von Schnellwechselsystemen und Werkzeugwechselwagen erforderlich, was zusätzliche Herstellkosten mit sich bringt.

Aus dem Dokument US 2009/151576 A1 ist ein Heißpressverfahren und aus der EP 0145832 A2 ein Kaschierverfahren zum Kaschieren eines Formteils bekannt.

Der Erfindung liegt deshalb die Aufgabe zugrunde vorbesagte Nachteile zu überwinden und eine Vorrichtung für die Kaschierung bereit zu stellen, die eine zumindest teilautomatisierte Fertigung erfordert.

Dies soll mit hoher Flexibilität einhergehen, d.h. der Möglichkeit verschiedene Bauteile, bzw. Fahrzeugteile auf der gleichen Kaschierlinie zu verwenden, um dadurch geringere Fertigungskosten, verbessertes Qualitätsmanagement bzw. chargenreine Fertigung sowie Risikominimierung zu erzielen.

Diese Aufgabe wird durch die Merkmalskombination gemäß Patentanspruch 1 gelöst.

Erfindungsgemäß ist dazu eine Fertigungsvorrichtung mit den Merkmalen von Anspruch 1 vorgesehen, bei der zwischen einem auf einem Bauteilträger angeordneten Bauteil und einer mit Druck beaufschlagbaren Membran eine Oberware auf das Bauteil appliziert wird und dann ein zwischen dem Bauteil und der Oberware vorgesehener Klebstoff aktiviert wird.

In einer besonders vorteilhaften Ausgestaltung der Erfindung wird eine Fertigungsvorrichtung zur Kaschierung einer Oberware auf ein Fahrzeugbauteil oder allgemein ein Bauteil vorgesehen, wobei die Fertigungsvorrichtung ein auf einer Bodenfläche fahrbares Transportsystem umfasst, welches über eine Bauteilaufnahme an einer der Bodenflächen abgewandten Oberseite des Transportsystems verfügt, sowie einer mittels einer Handhabungseinrichtung über die Bauteilaufnahme bewegbaren Oberwarenkaschiereinrichtung (Einrichtung zum Kaschieren einer Oberware), die über eine Halteeinrichtung zum Greifen einer Oberware verfügt, sowie einer von einer elastischen Membran begrenzten Druckkammer zum Erzeugen eines Prozessdrucks mittels der Membran auf die Oberflächenseite der Oberware, insbesondere auf diejenige Oberflächenseite, die die spätere Sichtseite der Oberware auf dem Fahrzeugbauteil bildet.

Weiter vorteilhaft ist eine Unterdruckerzeugungseinrichtung zum Erzeugen eines Unterdrucks in einem Bereich innerhalb oder unterhalb der Bauteilaufnahme bzw. an einem Bereich an dem sich der Randbereich der Oberware befindet, wenn die Oberware auf die Oberfläche des Trägers appliziert wurde.

Ebenfalls vorteilhaft ist es, wenn die Druckkammer der Oberwarenkaschiereinrichtung von einem einseitig an seiner Unterseite (d.h. dem Carrier bzw. Transportsystem zugewandten Seite) mittels einer Membran verschlossenen kastenartigen Gehäuses umgeben wird und die Oberwarenkaschiereinrichtung wenigstens einen durch eine Gehäusewand des Gehäuses zur Druckkammer verlaufenden Zuführkanal zum Zuführen eines Druck erzeugenden Gases oder Mediums verfügt. Auf diese Weise kann oberhalb der Membran ein Druckaufgebaut werden, so dass die Membran nach außen gedrückt würde bzw. auf die Oberfläche des Bauteils so gedrückt wird, dass diese dort flächig anliegt.

In einer weiteren vorteilhaften Ausgestaltung der Erfindung ist vorgesehen, dass die Oberwarenkaschiereinrichtung ferner mehrere nach unten weisende Vakuumgreifer aufweist, um die Oberware in einem Bereich, vorzugsweise einem Randbereich zu greifen, so dass sich die Oberware unterhalb der Membran befindet. Denkbar wäre auch eine alternative Greifvorrichtung, welche keine Beschädigungen im späteren Sichtbereich der Oberware hinterlässt.

Ebenfalls von Vorteil ist, wenn im Gehäuse, insbesondere an dessen Innenseiten eine Mehrzahl an Wärmequellen angeordnet sind. Diese Wärmequellen dienen der Erwärmung der beiden miteinander zu verbindenden Materialen bzw. dem Klebstoff dazwischen bis zur Aktivierungstemperatur. Ferner erfolgt dadurch eine leichte Materialausdehung, so dass eine spätere Faltenbildung einer Oberware auf dem Bauteil noch besser verhindert wird, wenn das Bauteil und die Oberware auf Zimmertemperatur oder Umgebungstemperatur abkühlen. Ergänzend kann eine Straffvorrichtung wirken, um die erwärmte und gespannte Oberware in diesem Zustand zu straffen.

In einer weiteren vorteilhaften Ausgestaltung der Erfindung ist vorgesehen, dass die Oberwarenkaschiereinrichtung an dessen nach (d. h. in Richtung des darunter befindlichen Transportsystem (oder auch Carriers genannt) unten weisender Seite eine Halte- und Spannvorrichtung für die Oberware und weiter vorzugsweise auch noch eine Führungseinrichtung, insbesondere Führungsstifte angeordnet sind, die ausgebildet sind mit einer am Transportsystem ausgebildeten korrespondierenden Führungseinrichtung, insbesondere Führungsöffnungen zusammenzuwirken, um die Oberwarenkaschiereinrichtung zum Aufbringen der Oberware über die Bauteilaufnahme bzw. das Bauteil in eine bestimmungsgemäße Position zum Transportsystem zu bringen. Auf diese Weise kann die Oberwarenkaschiereinrichtung zusammen mit der Oberware über dem Transportsystem positioniert werden und dann soweit nach unten verlagert werden und über die Führungseinrichtung gesteuert bewegt werden, bis die Oberware bestimmungsgemäß auf dem Bauteil sozusagen aufgespannt ist.

Erfindungsgemäß ist weiter vorgesehen die Oberwarenkaschiereinrichtung über ein Vakuumschwert verfügt, um an seinem freien Schwertende ein Vakuum zu Erzeugen und zwar insbesondere in der Spannebene in der sich eine von der Oberwarenkaschiereinrichtung gehaltene Oberware (und speziell eine Naht) befindet, wobei am Schwertende vorzugsweise Dichtungslippen angebracht sind. So lässt sich eine mit einer Naht ausgeführte Oberware besonders vorteilhaft auf der Oberfläche des Bauteils applizieren und kaschieren.

Ebenfalls bevorzugt ist eine Ausgestaltung bei der die Bauteilaufnahme eine Form korrespondierend zu dem zu kaschierenden Bauteil aufweist und die Bauteilaufnahme oder eine Basisplatte an der die Bauteilaufnahme befestigt ist über Vakuumkanäle verfügt, um insbesondere im Randbereich einer über das Bauteil gebrachten Oberware ein Unterdruck zu erzeugen. Auf diese Weise wird sichergestellt, dass die Oberware, in Verbindung mit der Membran in die Umbiegebereiche gezogen wird und dort gut fixiert bleibt bis der Klebstoff die gewünschte Klebekraft erreicht hat.

Ferner kann mit Vorteil vorgesehen sein, dass die Bauteilaufnahme eine Vielzahl von Öffnungen (z. B. ein über die gesamte Fläche ausgebildetes Lochmuster) aufweist, die jeweils einen Verbindungskanal zwischen dem Innenraum und dem Außenraum oberhalb der Auflagefläche der Bauteilaufnahme bilden, die als Auflagefläche zum Aufbringen des Bauteils gedacht ist.

Weitere vorteilhafte Ausgestaltungen sind:
i) in den Innenraum der Bauteilaufnahme münden eine Warmluftzuführung und eine Warmluftabführung, um Warmluft von einer Abwärmeeinrichtung des Transportsystems zu bzw. wegzuführen,
ii) in dem Innenraum der Bauteilaufnahme sind ein oder mehrere Luftverwirbelungseinrichtungen vorgesehen sind,
iii) die Abwärme wird von dem Antriebsstrang oder einem anderen aktiven Aggregat des Transportsystems verwendet,
iv) der Bauteilträger ist auswechselbar an einer Grundplatte bzw. Werkzeugträgerplatte am Transportsystem befestigt. Auf dieser Werkzeugträgerplatte können diverse Bauteilaufnahme luftdicht aufgesetzt werden bzw. so installiert werden, dass das Vakuum über die Vakuumkanäle zwischen dem Bauteilträger bzw. der Werkzeugträgerplatte und der Oberwarenkaschiereinrichtung erzeugbar ist.

In einer weiteren vorteilhaften Ausgestaltung der Erfindung ist vorgesehen, dass das fahrbare Transportsystem über einen gasbetriebenen Antrieb oder Wasserstoffantrieb zum Bewegen insbesondere Hin- und Herfahren des Transportsystems verfügt und über eine Wärmetauschereinrichtung, um die Abwärme über eine Abwärmeeinrichtung in den Innenraum der Bauteilaufnahme zu befördern. Das Transportsystem oder auch Carrier genannt, können bevorzugt selbständig fahren und somit an verschiedene Plätze befördert werden.

Der Carrier besteht mit Vorteil aus einem FTS System (Freifahrendes Transport System) oder einem sogenannten STS (Schienengeführtes Transport System).

Das beschriebene System ist auf sämtliche Schienen-Transport- und Fördersysteme wie z. B. Ketten- oder Rollenbahnen, Förderbänder anwendbar. Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine beispielhafte Darstellung einer erfindungsgemäßen Fertigungsvorrichtung;
- Fig. 2: eine ähnliche Ansicht der Fertigungsvorrichtung aus Figur 1 in der zusammengefahrenen Position;
- Fig. 3: eine detaillierte Ansicht eines Ausführungsbeispiels einer Oberwarenkaschiereinrichtung (auch als Regime bezeichnet);
- Fig. 4: eine detaillierte Teil-Ansicht eines Ausführungsbeispiels eines Carriers bzw. fahrbares Transportsystem und zwar des Bauteilträgers;
- Fig. 5: eine ähnliche Ansicht der Fertigungsvorrichtung aus Figur 2 in der zusammengefahrenen Position in einem besseren Detaillierungsgrad und
- Fig. 6: eine Teilansicht aus der Fig. 5.

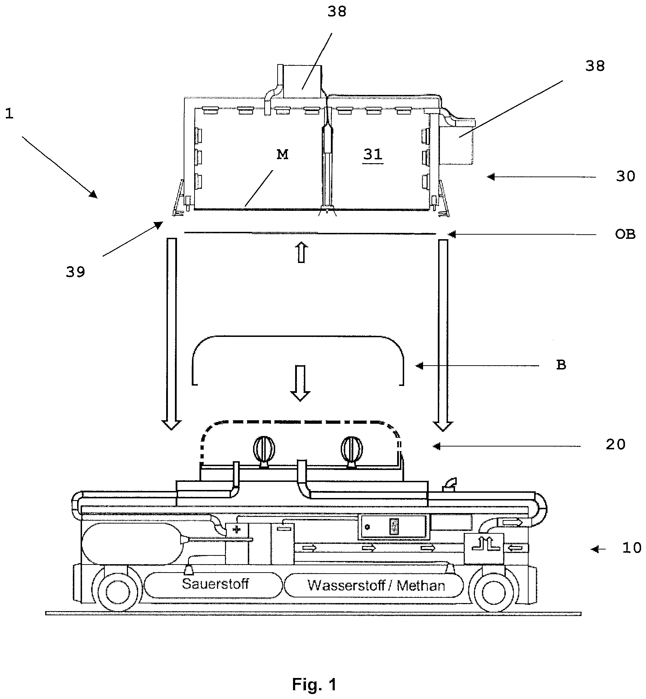

Nachfolgend wird die Erfindung mit Bezug auf die Figuren 1 bis 6 näher erläutert, wobei gleiche Bezugszeichen in den Figuren auf gleiche strukturelle und/oder funktionale Merkmale hinweisen.

Die Figuren zeigen eine beispielhafte Darstellung einer erfindungsgemäßen Fertigungsvorrichtung 1. Die Fertigungsvorrichtung 1 ist ausgebildet zur Kaschierung einer Oberware "OB" auf ein Fahrzeugbauteil B.

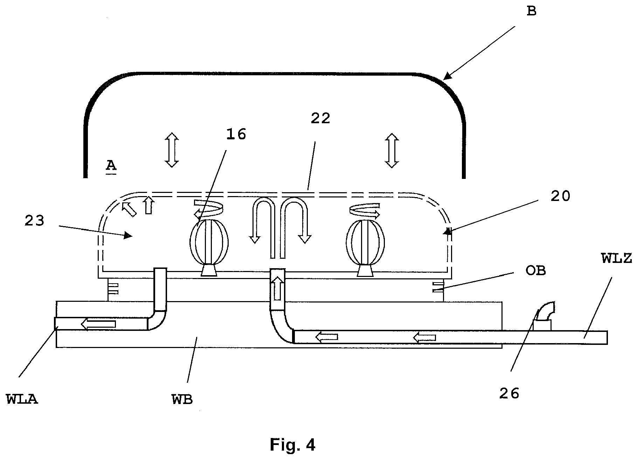

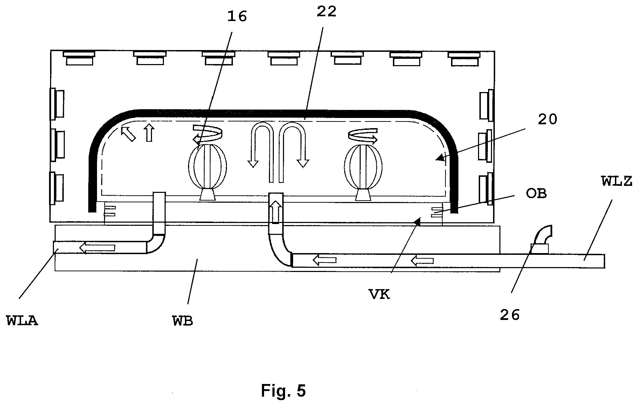

Die Fertigungsvorrichtung 1 umfasst ein auf einer Bodenfläche fahrbares Transportsystem 10. Dieses verfügt über eine Bauteilaufnahme 20 an der der Bodenflächen abgewandten Oberseite. Diese Bauteilaufnahme 20 wird im Zusammenhang mit den Figuren 4 und 5 näher beschrieben.

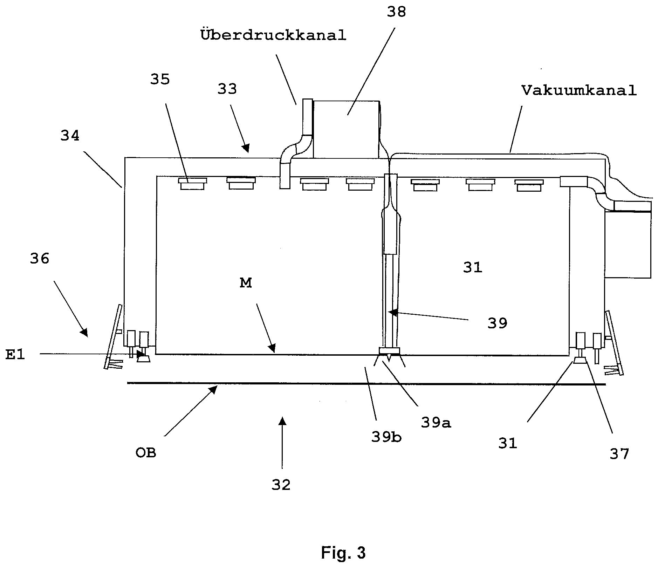

Ferner ist oben in der Figur 1 und im Detail in der Figur 3 ein mittels einer nicht näher gezeigten Handhabungseinrichtung über die Bauteilaufnahme 20 bewegbaren Oberwarenkaschiereinrichtung 30 gezeigt. Hierzu besitzt diese Oberwarenkaschiereinrichtung 30 zwei Verbindungseinrichtungen 38, um diese an einem Roboterarm zu montieren.

Die Oberwarenkaschiereinrichtung 30 verfügt weiter über eine Halteeinrichtung 39 zum Greifen einer Oberware OB, nämlich mehrere nach unten weisende Vakuumgreifer 39. Ferner ist zu erkennen, dass die Oberwarenkaschiereinrichtung 30 eine von einer elastischen Membran M begrenzte Druckkammer 31 zum Erzeugen eines Prozessdrucks ausbildet, um mittels der Membran M einen Druck auf eine Oberflächenseite der Oberware OB zu bringen und zwar auf diejenige Oberflächenseite, die die spätere Sichtseite der Oberware OB auf dem Fahrzeugbauteil bildet. Die Membran M ist in diesem Zustand oberhalb der zu applizierenden Oberware OB.

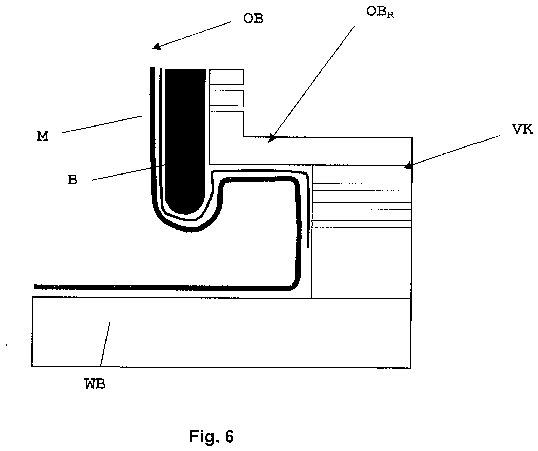

Ergänzend ist eine, wie in der Figur 6 gezeigte Unterdruckerzeugungseinrichtung zum Erzeugen eines Unterdrucks über Vakuumkanäle VK an der Werkzeugbasis WB in einem Bereich unterhalb der Bauteilaufnahme 20 gezeigt, welche im Zusammenhang mit der Figur 6 näher dargestellt wird.

Die Druckkammer 31 der Oberwarenkaschiereinrichtung 30 ist von einem einseitig an seiner Unterseite 32 von der Membran M verschlossenen kastenartigen Gehäuse 33 umgeben. Durch die Gehäusewand 34 des Gehäuses 33 verlaufen zur Druckkammer 31 Zuführkanäle 31 zum Zuführen eines Druck erzeugenden Gases. Dadurch lässt sich ein Druck aufbauen, der gegen die Membran M wirkt und diese elastische Membran M nach Außen drückt.

An den Innenseiten des Gehäuses 33 sind eine Mehrzahl an Wärmequellen 35 angeordnet sind.

Ferner sind eine Halte- und Spannvorrichtung 36 für die Oberware vorgesehen, die in dieser Ausführung als Greifer ausgebildet sind.

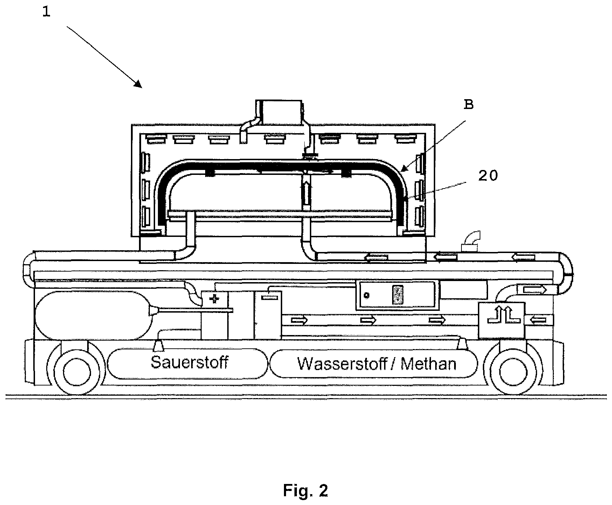

Daneben ist eine Führungseinrichtung 37 in Form von ein- und ausfahrbaren Führungsstiften 37 vorgesehen, die ausgebildet sind mit einer am Transportsystem 10 ausgebildeten korrespondierenden Führungseinrichtung, insbesondere Führungsöffnungen zusammenzuwirken, um die Oberwarenkaschiereinrichtung 30 zum Aufbringen der Oberware OB über die Bauteilaufnahme 20 bzw. das Bauteil B in eine bestimmungsgemäße Position, wie diese beispielhaft in der Figur 2 gezeigt ist, zu bringen.

Ebenfalls in diesem Ausführungsbeispiel vorgesehen ist, dass die Oberwarenkaschiereinrichtung 30 über ein Vakuumschwert 39 verfügt, um an seinem freien (nach unten weisenden) Schwertende 39a ein Vakuum zu erzeugen und zwar insbesondere in der Spannebene E1 in der sich eine von der Oberwarenkaschiereinrichtung 30 gehaltene Oberware OB befindet, wobei am Schwertende 39a vorzugsweise Dichtungslippen 39b angebracht sind.

Die Bauteilaufnahme 20 verfügt, wie in der Figur 4 und 5 ersichtlich über eine Vielzahl von Öffnungen 22, die jeweils einen Verbindungskanal zwischen dem Innenraum 24 und dem Außenraum A oberhalb der Auflagefläche 23 bilden. Durch diese kann Wärme zu dem Bauteil B in Form eines warmen Mediums wie warmer Luft befördert werden, um das Bauteil B zu erwärmen (was beispielhaft durch die Pfeile dargestellt wird). Warme Luft strömt zu, wird verteilt und kann durch die Öffnungen 22 das Bauteil B erwärmen.

Hierzu verlaufen in den Innenraum 24 der Bauteilaufnahme 20 eine Warmluftzuführung WLZ und eine Warmluftabführung WLA, um Warmluft von einer Abwärmeeinrichtung des Transportsystems 10 zu bzw. wegzuführen. Ein Überdruckabgang 26 ist ebenfalls vorgesehen, um Wärme über einen Bypass abzuführen. Ergänzend kann ein Luftmischsystem vorgesehen sein, um die optimale Temperatur im Innenraum 24 zu erzeugen. Um eine gleichmäßige Wärmeverteilung zu erzielen sind in dem Innenraum 24 der Bauteilaufnahme 20 zwei beispielhafte Luftverwirbelungseinrichtungen 16 vorgesehen.

Das fahrbare Transportsystem 10 verfügt über eigene Brennstofftanks bzw. Medientanks und verfügt über einen gasbetriebenen Antrieb oder einen Wasserstoffantrieb zum Bewegen insbesondere Hin- und Herfahren des Transportsystems 10.

Ein weiterer Aspekt der vorliegenden Erfindung betrifft neben der Vorrichtung auch das Verfahren zum Kaschieren. Hierzu wird ein Verfahren zum Kaschieren einer Oberware OB auf ein Bauteil B vorgeschlagen, insbesondere unter Verwendung einer wie zuvor beschriebenen Fertigungsvorrichtung 1, mit den folgenden Schritten:
a. ein mit einer Oberware OB zu kaschierendes Bauteil B wird vorzugsweise mittels einer Referenzpunktausrichtung (RPS) auf eine Bauteilaufnahme 20 der Fertigungsvorrichtung 1 gebracht;
b. die Oberware OB wird mittels der Oberwarenkaschiereinrichtung 30 gegriffen und mittels einer Spanneinrichtung unterhalb der Membran M gespannt bzw. gehalten;
c. die Oberwarenkaschiereinrichtung 30 wird zusammen mit der Oberware OB mittels einer Handhabungseinrichtung relativ zur Bauteilaufnahme 20 so positioniert, dass diese auf der Oberfläche des Bauteils B aufliegt bzw. bis eine bestimmungsgemäße relative Endposition erreicht ist, vorzugsweise unter Verwendung einer Führungseinrichtung (wie beispielhaft in der Figur 2 gezeigt);
d. ein warmes gasförmiges Medium, wie Warmluft wird zur Bauteilaufnahme 20 geleitet und aktiviert insbesondere einen Klebstoff zwischen der Bauteiloberfläche des Bauteils B und der dem Bauteil B zugewandten Oberwareunterseite;
e. in der Druckkammer 31 der Oberwarenkaschiereinrichtung 30 wird ein Überdruck erzeugt bis die Membran M mit der Oberware OB an der Oberseite des Bauteils B anliegt.
f. zusätzlich wird über Vakuumkanäle 21 insbesondere im Randbereich (OB_{R}) der über das Bauteil (B) gebrachte Oberware (OB) ein Unterdruck erzeugt.

In einer vorteilhaften Ausführung des genannten Verfahrens werden die Schritte d) bis f) solange aufrechterhalten werden, bis der Klebstoff zwischen dem Bauteil B und Oberware OB aktiviert ist bzw. dessen Aktivierungstemperatur erreicht ist.

Das Verfahren kann im Fall einer vorhandenen Naht in der Oberware so gestaltet werden, dass das Vakuumschwert die Naht der Oberware OB fixiert.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

Es kann vorgesehen werden, dass eine Mehrzahl an Vakuumkanälen in der Bauteilaufnahme vorgesehen ist und die einzelnen Kanäle dann auch einzeln angesteuert werden können, insbesondere von einer zentralen Steuerungseinrichtung, die die Vakuumsaugleistung in jedem Kanal entsprechend regelt, so dass eine verbesserte Positionierung und Fixierung der Oberware möglich wird, insbesondere ohne dabei den Hauptvakuumkreis für die Kaschierung zu aktivieren oder zu beeinflussen. Insofern können erfindungsgemäß zur genauen Lagepositionierung der Oberware eine Mehrzahl individuell ansteuerbarer Vakuumkanäle vorgesehen werden. Diese können insbesondere zeitversetz oder synchron angesteuert werden.

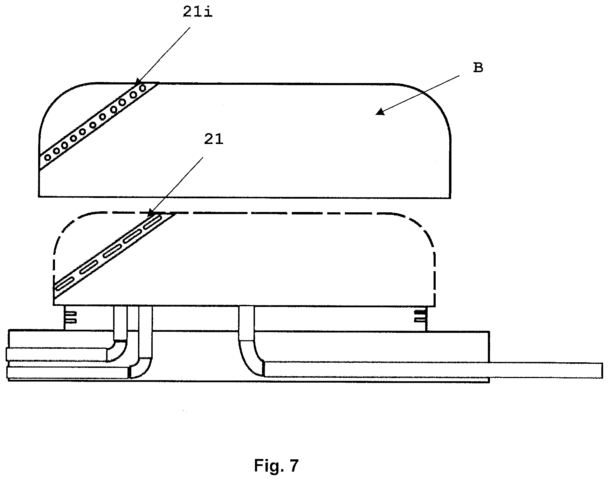

Besonders vorteilhaft ist es auch, wie in der Figur 7 gezeigt, eine Anordnung von mehreren Vakuumkreisen bzw. Vakuumkanälen 21 lokal an definierten Positionen der Bauteilaufnahme 20 vorzusehen und korrespondierend dazu Vakuumöffnungen 21i im Bauteil B vorzusehen. Dadurch lässt sich eine lokale gezielte Ansaugung der Oberware realisieren.

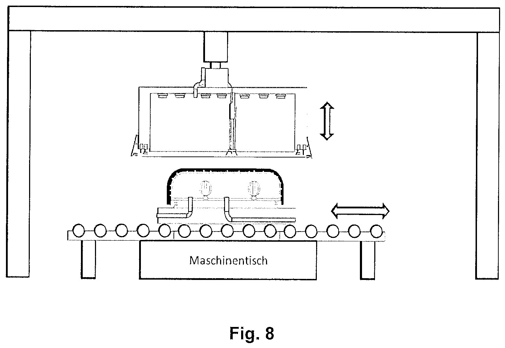

Ebenfalls möglich ist es, wie in der Fig. 8 gezeigt, auf den Cariier zu verzichten und einen festen Maschinentisch vorzusehen und ggf. eine fest installierte bzw. gegenüber einer Portalvorrichtung oder Tragvorrichtung beweglichen Oberwarenkaschiereinrichtung 30. Die Oberware kann grundsätzlich manuell oder halbautomatisch aufgebracht werden.

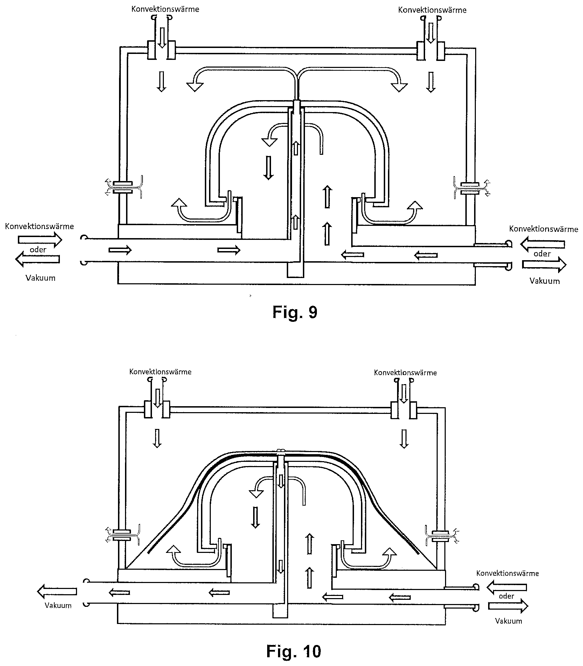

Weitere bevorzugte Varianten finden sich in den Fig. 9 und 10, welche eine alternative Lösung zur Zuführung der Aktivierungswärme zeigen. Alle Vakuumkreise in der Bauteilaufnahme 20 können auch zusätzlich als Konvektionswärmeleitungen verwendet werden und somit kann das Klebesytem prozesssicher aktiviert werden. Zusätzlich wird in das Regime auch Konvektionswärme, in Drücken aller Art, zugeführt. Durch aktive Sensorik in diesem Prozess ist eine genau gesteuerte Erwärmung der Bauteile/Klebeoberfläche gewährleistet. Jede Konvektionswärmezufuhr kann einzeln angesteuert werden und somit können die Parameter auf jedes Bauteil B einzeln angepasst werden.

In der Figur 10 ist gezeigt, wie die Naht X durch den Nahtvakuumkanal angesaugt und positioniert wird. Durch die weiteren Vakuumkanäle 21 in der Bauteilaufnahme 20 und die Einlässe im Regime wird Konvektionswärme in den Prozess geführt.

## Patentansprüche

1. Fertigungsvorrichtung (1) zur Kaschierung einer Oberware auf einem Fahrzeugbauteil (2) oder ein Bauteil (B), wobei die Fertigungsvorrichtung vorzugsweise ein auf einer Bodenfläche fahrbares Transportsystem (10) oder ein Tischsystem umfasst, welches über eine Bauteilaufnahme (20) an einer der Bodenflächen abgewandten Oberseite verfügt, sowie einer mittels einer Handhabungseinrichtung über die Bauteilaufnahme (20) bewegbaren Oberwarenkaschiereinrichtung (30), die über eine Halteeinrichtung zum Greifen einer Oberware verfügt, sowie einer von einer elastischen Membran (M) begrenzten Druckkammer (31) zum Erzeugen eines Prozessdrucks mittels der Membran (M) auf eine Oberflächenseite der Oberware, insbesondere auf diejenige Oberflächenseite, die die spätere Sichtseite der Oberware auf dem Fahrzeugbauteil bildet, **dadurch gekennzeichnet, dass** die Oberwarenkaschiereinrichtung (30) ferner über ein Vakuumschwert (37) verfügt, um an seinem freien Schwertende (37a) ein Vakuum zu Erzeugen.

2. Fertigungsvorrichtung (1) nach Anspruch 1, **dadurch gekennzeichnet, dass** die Druckkammer (31) der Oberwarenkaschiereinrichtung (30) von einem einseitig an einer Unterseite (32) offenen kastenartigen Gehäuse (33) umgeben wird und die Oberwarenkaschiereinrichtung (30) wenigstens einen durch eine Gehäusewand (34) des Gehäuses (33) zur Drucckammer (31) verlaufenden Zuführkanal (31) zum Zuführen eines Druck erzeugenden Gases verfügt.

3. Fertigungsvorrichtung (1) nach Anspruch 1 oder 2, **dadurch gekennzeichnet, dass** die Oberwarenkaschiereinrichtung (30) ein einseitig an einer Unterseite (32) mit der elastischen Membran (M) verschlossenes kastenartiges Gehäuse (33) aufweist an dem mehrere nach unten weisende Vakuumgreifer vorgesehen sind, um die Oberware in einem Randbereich zu greifen, so dass sich diese unterhalb der Membran (M) befindet.

4. Fertigungsvorrichtung (1) nach einem der vorhergehenden Ansprüche, **dadurch gekennzeichnet, dass** die Oberwarenkaschiereinrichtung (30) ein einseitig mit der elastischen Membran (M) verschlossenes kastenartiges Gehäuse (33) aufweist an dessen Innenseiten eine Mehrzahl an Wärmequellen (35) angeordnet sind.

5. Fertigungsvorrichtung (1) nach einem der vorhergehenden Ansprüche, **dadurch gekennzeichnet, dass** die Oberwarenkaschiereinrichtung (30) ein einseitig an einer Unterseite (32) mit der elastischen Membran (M) verschlossenes kastenartiges Gehäuse (33) aufweist, an dessen nach unten weisender Seite eine Halte- und Spannvorrichtung (36) für die Oberware und weiter vorzugsweise eine Führungseinrichtung (37), insbesondere Führungsstifte (37) angeordnet sind, die ausgebildet sind mit einer am Transportsystem (10) ausgebildeten korrespondierenden Führungseinrichtung, insbesondere Führungsöffnungen zusammenzuwirken, um die Oberwarenkaschiereinrichtung (30) zum Aufbringen der Oberware über die Bauteilaufnahme (20) bzw. das Bauteil (B) in eine bestimmungsgemäße Position zum Transportsystem (10) zu bringen.

6. Fertigungsvorrichtung (1) nach einem der vorhergehenden Ansprüche, **dadurch gekennzeichnet, dass** das freie Schwertende (37a) in der Spannebene (E1) in der sich eine von der Oberwarenkaschiereinrichtung (30) gehaltene Oberware befindet, angeordnet ist..

7. Fertigungsvorrichtung (1) nach einem der vorhergehenden Ansprüche, **dadurch gekennzeichnet, dass** die Bauteilaufnahme (20) eine Form korrespondierend zu dem zu kaschierenden Bauteil (B) aufweist und über Vakuumkanäle (21) verfügt, um insbesondere im Randbereich (OB_{R}) einer über ein Bauteil (B) gebrachte Oberware (OB) ein Unterdruck zu erzeugen und die Bauteilaufnahme (20) eine Vielzahl von Öffnungen (22) aufweist, die jeweils einen Verbindungskanal zwischen dem Innenraum (24) und dem Außenraum (A) oberhalb einer Auflagefläche (23) der Bauteilaufnahme (20) bilden, die als Auflagefläche (23) zum Aufbringen des Bauteils (B) gedacht ist.

8. Fertigungsvorrichtung (1) nach einem der vorhergehenden Ansprüche, **dadurch gekennzeichnet, dass** in den Innenraum (24) der Bauteilaufnahme (20) eine Warmluftzuführung und eine Warmluftabführung münden, um Warmluft von einer Abwärmeeinrichtung des Transportsystems (10) zu bzw. wegzuführen.

9. Fertigungsvorrichtung (1) nach einem der vorhergehenden Ansprüche, **dadurch gekennzeichnet, dass** in dem Innenraum (24) der Bauteilaufnahme (20) ein oder mehrere Luftverwirbelungseinrichtungen (16) vorgesehen sind.

10. Fertigungsvorrichtung nach einem der vorhergehenden Ansprüche,
**dadurch gekennzeichnet, dass**, das fahrbare Transportsystem (10) über einen gasbetriebenen Antrieb oder Wasserstoffantrieb zum Bewegen insbesondere Hin- und Herfahren des Transportsystems verfügt und über eine Wärmetauschereinrichtung, um die Abwärme über eine Abwärmeeinrichtung in den Innenraum (24) der Bauteilaufnahme (20) zu befördern.

11. Verfahren zum Kaschieren einer Oberware (OB) auf ein Bauteil (B), unter Verwendung einer Fertigungsvorrichtung (1) gemäß einem der vorhergehenden Ansprüche 1 bis 10, mit den folgenden Schritten:
a. ein mit einer Oberware (OB) zu kaschierendes Bauteil (B) wird vorzugsweise mittels einer Referenzpunktausrichtung (RPS) auf eine Bauteilaufnahme (20) einer Fertigungsvorrichtung (1) gebracht;
b. eine Oberware (OB) wird mittels der Oberwarenkaschiereinrichtung (30) gegriffen und mittels einer Spanneinrichtung unterhalb der Membran (M) gespannt;
c. die Oberwarenkaschiereinrichtung (30) wird zusammen mit der Oberware (OB) mittels einer Handhabungseinrichtung relativ zur Bauteilaufnahme (20) so positioniert, dass diese auf der Oberfläche des Bauteils (B) aufliegt bzw. bis eine bestimmungsgemäße relative Endposition erreicht ist, vorzugsweise unter Verwendung einer Führungseinrichtung;
d. ein warmes gasförmiges Medium, wie Warmluft wird zur Bauteilaufnahme (20) geleitet und aktiviert insbesondere einen Klebstoff zwischen der Bauteiloberfläche des Bauteils (B) und der dem Bauteil (B) zugewandten Oberwareunterseite;
e. in der Druckkammer (31) der Oberwarenkaschiereinrichtung (30) wird ein Überdruck erzeugt bis die Membran (M) mit der Oberware (OB) an der Oberseite des Bauteils (B) anliegt.

12. Verfahren nach Anspruch 11, wobei
g. zusätzlich über Vakuumkanäle (21), insbesondere mehrere individuell betreffend dem Unterdruck ansteuerbare Vakuumkanäle, insbesondere im Randbereich (OB_{R}) der über das Bauteil (B) gebrachte Oberware (OB) ein Unterdruck erzeugt wird.

13. Verfahren nach Anspruch 11 oder 12, wobei die Schritte d) bis f) solange aufrechterhalten werden, bis der Klebstoff zwischen dem Bauteil (B) und Oberware (OB) aktiviert ist bzw. dessen Aktivierungstemperatur erreicht ist.

14. Verfahren nach einem der Ansprüche 11 bis 13, wobei das Vakuumschwert eine Naht der Oberware (OB) fixiert.

## Claims

1. A manufacturing device (1) for laminating a top fabric on a vehicle component (2) or a component (B), the manufacturing device preferably comprising a transport system (10) drivable on a ground surface or a stage system, which has a component mount (20) on an upper side facing away from the ground surface, and a top fabric laminating means (30) movable across the component mount (20) by means of a handling means, which has a holding means for gripping a top fabric, and a pressure chamber (31) delimited by an elastic membrane (M) for generating a process pressure by means of the membrane (M) on a surface side of the top fabric, in particular on that surface side of the top fabric which forms the later visible side of the top fabric on the vehicle component, **characterized in that** the top fabric laminating means (30) further has a vacuum blade (37) to generate a vacuum at its free blade end (37a).

2. The manufacturing device (1) according to claim 1, **characterized in that** the pressure chamber (31) of the top fabric laminating means (30) is surrounded by a box-like housing (33) unilaterally open on a bottom side (32), and **in that** the top fabric laminating means (30) has at least one supply duct (31) for supplying a pressurizing gas, which extends through a housing wall (34) of the housing (33) to the pressure chamber (31).

3. The manufacturing device (1) according to claim 1 or 2, **characterized in that** the top fabric laminating means (30) has a box-like housing (33) unilaterally closed by the elastic membrane (M) on a bottom side (32), at which multiple vacuum grippers are provided which are directed downwards to grip the top fabric in an edge region such that it is beneath the membrane (M).

4. The manufacturing device (1) according to any one of the preceding claims, **characterized in that** the top fabric laminating means (30) has a box-like housing (33) unilaterally closed by the elastic membrane (M), on the inner sides of which a plurality of heat sources (35) are arranged.

5. The manufacturing device (1) according to any one of the preceding claims, **characterized in that** the top fabric laminating means (30) has a box-like housing (33) which is unilaterally closed on an bottom side (32) by the elastic membrane (M), on the side of which facing down a holding and tauting means (36) for the top fabric and further preferably a guide means (37), in particular guide pins (37), are arranged which are configured to cooperate with corresponding guide means, in particular guide openings, formed on the transport system (10) to bring the top fabric laminating means (30) into an intended position with respect to the transport system (10) across the component mount (20) or the component (B) for applying the top fabric.

6. The manufacturing device (1) according to any one of the preceding claims, **characterized in that** the free blade end (37a) is arranged in the tauting plane (E1) in which a top fabric held by the top fabric laminating means (30).

7. The manufacturing device (1) according to any one of the preceding claims, **characterized in that** the component mount (20) has a shape corresponding to the component (B) to be laminated and has vacuum ducts (21) to generate negative pressure, in particular in the edge region (OB_{R}) of a top fabric (OB) applied across a component (B), and **in that** the component mount (20) has a plurality of openings (22), each forming a connecting duct between the interior (24) and the exterior (A) above a support surface (23) of the component mount (20) which is intended as a support surface (23) for applying the component (B).

8. The manufacturing device (1) according to any one of the preceding claims, **characterized in that** a hot-air supply and a hot-air discharge open into the interior (24) of the component mount (20) to supply or remove hot air to or from a waste heat means of the transport system (10).

9. The manufacturing device (1) according to any one of the preceding claims, **characterized in that** one or more air mixing means (16) are provided in the interior (24) of the component mount (20).

10. The manufacturing device according to any one of the preceding claims, **characterized in that** the drivable transport system (10) has a gas-powered drive or hydrogen drive for moving the transport system, in particular driving it back and forth, and a heat exchanger means to convey the waste heat through a waste heat means into the interior (24) of the component mount (20).

11. A method of laminating a top fabric (OB) onto a component (B) using a manufacturing device (1) according to any one of the preceding claims 1 to 10, having the following steps:
a. a component (B) to be laminated with a top fabric (OB) is preferably brought onto a component mount (20) of a manufacturing device (1) by means of reference point alignment (RPS);
b. a top fabric (OB) is gripped by means of the top fabric laminating means (30) and tauted below the membrane (M) by means of a tauting means;
c. the top fabric laminating means (30) is positioned together with the top fabric (OB) by means of a handling means relative to the component mount (20) such that it rests on the surface of the component (B) or until a specified relative end position is reached, preferably using a guide means;
d. a hot gaseous medium, such as hot air, is conducted to the component mount (20) and in particular activates an adhesive between the component surface of the component (B) and the bottom side of the top material facing the component (B);
e. positive pressure is generated in the pressure chamber (31) of the top fabric laminating means (30) until the membrane (M) rests on the upper side of the component (B) with the top fabric (OB).

12. The method according to claim 11, wherein
g. additionally, negative pressure is generated through vacuum ducts (21), in particular multiple vacuum ducts individually controllable with regard to the negative pressure, in particular in the edge region (OB_{R}) of the top fabric (OB) brought across the component (B).

13. The method according to claim 11 or 12, wherein steps d) to f) are maintained until the adhesive between the component (B) and the top fabric (OB) has been activated or the activation temperature thereof has been reached.

14. The method according to any one of claims 11 to 13, wherein the vacuum blade secures a seam of the top fabric (OB).

## Revendications

1. Dispositif de fabrication (1) pour la lamination d'une nappe supérieure sur un composant de véhicule (2) ou composant (B), dans lequel le dispositif de fabrication comprend de préférence un système de transport (10) pouvant être déplacé sur une surface de sol, ou un système de table, qui dispose d'un porte-composant (20) sur une face supérieure tournée vers l'extérieur des surfaces de sol, et un dispositif de laminage de nappe supérieure mobile (30) sur le porte-composant (20) au moyen d'un dispositif de manutention, lequel dispositif de laminage dispose d'un dispositif de maintien pour saisir une nappe supérieure, et une chambre de pression (31) délimitée par une membrane élastique (M) pour générer une pression de traitement au moyen de la membrane (M) sur un côté de surface de la nappe supérieure, en particulier sur le côté de surface qui forme ultérieurement le côté visible de la nappe supérieure sur le composant de véhicule, **caractérisé en ce que** le dispositif de laminage de nappe supérieure (30) comporte en outre un sabre à vide (37) pour générer un vide à son extrémité libre de sabre (37a).

2. Dispositif de fabrication (1) selon la revendication 1, **caractérisé en ce que** la chambre de pression (31) du dispositif de laminage de nappe supérieure (30) est entourée d'un boîtier en forme de caisson (33) qui est ouvert d'un côté sur une face inférieure (32) et le dispositif de laminage de nappe supérieure (30) dispose d'au moins un canal d'alimentation (31) s'étendant à travers la paroi (34) du boîtier (33) vers la chambre de pression (31) pour fournir un gaz générateur de pression.

3. Dispositif de fabrication (1) selon la revendication 1 ou 2, **caractérisé en ce que** le dispositif de laminage de nappe supérieure (30) présente un boîtier en forme de caisson (33) qui est fermé d'un côté sur une face inférieure (32) avec la membrane élastique (M) et sur lequel plusieurs pinces à vide pointant vers le bas sont prévues pour saisir la nappe supérieure dans une zone de bord de sorte qu'elle se trouve sous la membrane (M).

4. Dispositif de fabrication (1) selon l'une des revendications précédentes, **caractérisé en ce que** le dispositif de laminage de nappe supérieure (30) comporte un boîtier en forme de caisson (33) fermé d'un côté par la membrane élastique (M) et sur les faces intérieures duquel une pluralité de sources de chaleur (35) sont agencées.

5. Dispositif de fabrication (1) selon l'une des revendications précédentes, **caractérisé en ce que** le dispositif de laminage de nappe supérieure (30) comporte un boîtier en forme de caisson (33) qui est fermé d'un côté sur une face inférieure (32) avec la membrane élastique (M) et sur le côté orienté vers le bas duquel sont disposés un dispositif de maintien et de tension (36) pour la nappe supérieure et de manière davantage préférée un dispositif de guidage (37), en particulier des broches de guidage (37), qui sont conçues pour coopérer avec un dispositif de guidage correspondant, en particulier des ouvertures de guidage, configuré sur le système de transport (10) afin d'amener le dispositif de laminage de nappe supérieure (30) dans une position spécifiée par rapport au système de transport (10) pour appliquer la nappe supérieure via le porte-composant (20) ou le composant (B).

6. Dispositif de fabrication (1) selon l'une des revendications précédentes, **caractérisé en ce que** l'extrémité libre de sabre (37a) est agencée dans le plan de serrage (E1) dans lequel se trouve une nappe supérieure maintenue par le dispositif de laminage de nappe supérieure (30).

7. Dispositif de fabrication (1) selon l'une des revendications précédentes, **caractérisé en ce que** le porte-composant (20) a une forme correspondant au composant (B) à laminer et dispose de canaux à vide (21), pour générer une dépression en particulier dans la région de bord (OB_{R}) d'une nappe supérieure (OB) amenée sur un composant (B) et le porte-composant (20) a une pluralité d'ouvertures (22), dont chacune forme un canal de liaison entre l'intérieur (24) et l'extérieur (A) au-dessus d'une surface d'appui (23) du porte-composant (20), laquelle surface d'appui est destiné à servir de surface d'appui (23) pour appliquer le composant (B).

8. Dispositif de fabrication (1) selon l'une des revendications précédentes, **caractérisé en ce qu'**une arrivée d'air chaud et une évacuation d'air chaud débouchent à l'intérieur (24) du porte-composant (20) pour fournir ou évacuer l'air chaud d'un dispositif de dissipation de chaleur du système de transport (10).

9. Dispositif de fabrication (1) selon l'une des revendications précédentes, **caractérisé en ce qu'**un ou plusieurs dispositifs de turbulence d'air (16) sont prévus à l'intérieur (24) du porte-composant (20).

10. Dispositif de fabrication selon l'une des revendications précédentes, **caractérisé en ce que** le système de transport mobile (10) dispose d'un entraînement à gaz ou à hydrogène pour déplacer le système de transport, en particulier pour le déplacer d'avant en arrière, et d'un dispositif échangeur de chaleur pour acheminer la chaleur résiduelle à l'intérieur (24) du porte-composant (20) via un dispositif de dissipation de chaleur.

11. Procédé de laminage d'une nappe supérieure (OB) sur un composant (B), à l'aide d'un dispositif de fabrication (1) selon l'une des revendications précédentes 1 à 10, comportant les étapes suivantes :
a. un composant (B) à laminer avec une nappe supérieure (OB) est amené sur un porte-composant (20) d'un dispositif de fabrication (1), de préférence au moyen d'un alignement de points de référence (RPS) ;
b. une nappe supérieure (OB) est saisie au moyen du dispositif de laminage de nappe supérieure (30) et tendue sous la membrane (M) au moyen d'un dispositif de serrage ;
c. le dispositif de laminage de nappe supérieure (30) est positionné avec la nappe supérieure (OB) par rapport au porte-composant (20) au moyen d'un dispositif de manutention de sorte qu'il repose sur la surface du composant (B) ou jusqu'à ce qu'une position finale relative spécifiée soit atteinte, de préférence à l'aide d'un dispositif de guidage ;
d. un milieu gazeux chaud, tel que de l'air chaud, est dirigé vers le porte-composant (20) et active en particulier un adhésif entre la surface de composant du composant (B) et la face inférieure de la nappe supérieure faisant face au composant (B) ;
e. une surpression est générée dans la chambre de pression (31) du dispositif de laminage de nappe supérieure (30) jusqu'à ce que la membrane (M) avec la nappe supérieure (OB) repose sur la face supérieure du composant (B).

12. Procédé selon la revendication 11, dans lequel
g. en outre, une dépression est générée via des canaux à vide (21), en particulier plusieurs canaux à vide réglables individuellement concernant la dépression, en particulier dans la zone de bord (OB_{R}) de la nappe supérieure (OB) amenée sur le composant (B).

13. Procédé selon la revendication 11 ou 12, dans lequel les étapes d) à f) sont maintenues jusqu'à ce que l'adhésif entre le composant (B) et la nappe supérieure (OB) soit activé ou que sa température d'activation soit atteinte.

14. Procédé selon l'une des revendications 11 à 13, dans lequel le sabre à vide fixe une couture de la nappe supérieure (OB).
